# EUROPÄISCHE PATENTSCHRIFT

(11) **EP 0 970 918 B1**
(45) Veröffentlichungstag und Bekanntmachung des Hinweises auf die Patenterteilung: **15.10.2003**
(21) Anmeldenummer: 99112436.3
(22) Anmeldetag: 30.06.1999
(51) Int. Cl.: C01B 33/38

(54) **Feinteiliges kristallines Natriumdisilikat**
Finely divided crystalline sodium disilicate
Disilicate de sodium cristallin finement divisé

(30) Priorität: 08.07.1998 DE 19830591; 08.06.1999 DE 19925928
(43) Veröffentlichungstag der Anmeldung: 12.01.2000
(73) Patentinhaber: Clariant GmbH, 65929 Frankfurt am Main (DE)
(72) Erfinder: Bauer, Harald, Dr., 50170 Kerpen (DE); Holz, Josef, 50374 Erftstadt (DE); Schimmel, Günther, Dr., 50374 Erftstadt (DE)

(56) Entgegenhaltungen:
- EP-A- 0 853 118
- EP-B- 0 164 514
- WO-A-97/19156
- DE-A- 4 107 230
- DE-A- 4 323 527
- DE-A- 4 400 024
- DE-C- 19 707 449

## Beschreibung

Die Erfindung betrifft ein feinteiliges kristallines schichtförmiges Natriumdisilikat der Formel NaMSiₓO_{2x+1·}yH₂O, wobei M Natrium oder Wasserstoff bedeutet, x eine Zahl von 1,9 bis 4 und y eine Zahl von 0 bis 20 ist, ein Verfahren zu seiner Herstellung und seine Verwendung.

Kristalline schichtförmige Natriumsilikate (Schichtsilikate), insbesondere solche der Formel NaMSiₓO₂ₓ₊₁·yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind, haben sich als geeignete Ersatzstoffe für die Gerüststoffe Phosphat und Zeolith, vorwiegend in Wasch- und Reinigungsmitteln, erwiesen.

Die Verwendung der vorgenannten kristallinen Schichtsilikate zur Enthärtung von Wasser wird beispielsweise in der EP-A-0 164 514 beschrieben. Bevorzugte kristalline Schichtsilikate sind solche, in denen M für Natrium steht und x die Werte 2 oder 3 annimmt.

Bevorzugte Ersatzstoffe sind sowohl beta- als auch delta-Natriumdisilikate (Na₂Si₂O₅· yH₂O), wobei beta-Natriumdisilikat beispielsweise nach dem Verfahren der PCT/WO 91/08171 erhalten werden kann.

Ein kommerziell erhältliches kristallines Natriumdisilikat, welches der oben genannten Formel entspricht, ist beispielsweise das SKS-6 der Clariant GmbH. Dieses Produkt setzt sich aus den verschiedenen polymorphen Phasen des Natriumdisilikates zusammen und besteht somit aus alpha-Dinatriumdisilikat, beta-Dinatriumdisilikat und delta-Dinatriumdisilikat. Bevorzugt ist ein möglichst hoher Gehalt an delta-Dinatriumdisilikat. Als kommerzielles Produkt können auch Anteile an nichtkristallisiertem Natriumsilikat enthalten sein.

Grundsätzlich ist man bisher bestrebt, solche Natriumdisilikate herzustellen, die einen möglichst hohen Anteil an nur einer polymorphen Phase enthalten, wie etwa mit einem delta-Dinatriumdisilikat-Anteil von mehr als 90 Gew.-% oder höher.

Die bisher bekannten Natriumdisilikate können bereits einen hohen Anteil der an sie gestellten Forderungen erfüllen. So weisen sie im allgemeinen einen hohes Calciumbindevermögen auf und ihre sonstigen waschtechnischen und anwendungstechnischen Eigenschaften sind für viele Bereiche ausreichend.

Es besteht jedoch nach wie vor Bedarf an geeigneten Substanzen, die ein sehr hohes Calciumbindevermögen aufweisen und gleichzeitig nur geringe Löserückstände in Wasser erzeugen (nachfolgend als Siebrückstandsrest bezeichnet).

Diese Aufgabe wird gelöst durch ein feinteiliges kristallines schichtförmiges Natriumdisilikat der eingangs genannten Art, welches dadurch gekennzeichnet ist, daß es einen Gehalt von
0 bis 40 Gew.-% an alpha-Dinatriumdisilikat
0 bis 40 Gew.-% an beta-Dinatriumdisilikat
40 bis 100 Gew.-% an delta-Dinatriumdisilikat
0 bis 40 Gew.-% an amorphen Anteilen
aufweist.

Das vorgenannte alpha-Dinatriumdisilikat entspricht dem in der EP 0 164 514 B1 beschriebenen Na-SKS-5, charakterisiert durch die dort wiedergegebenen Röntgenbeugungsdaten, die dem alpha-Na₂Si₂O₅ zugeordnet werden, dessen Röntgenbeugungsdiagramme beim Joint Commitee of Powder Diffraction Standards mit den Nummern 18-1241, 22-1397, 22-1397A, 19-1233, 19-1234, 19-1237 registriert sind.

Das vorgenannte beta-Dinatriumdisilikat entspricht dem in der EP 0 164 514 B1 beschriebenen Na-SKS-7, charakterisiert durch die dort wiedergegebenen Röntgenbeugungsdaten, die dem beta-Na₂Si₂O₅ zugeordnet werden, dessen Röntgenbeugungsdiagramme beim Joint Commitee of Powder Diffraction Standards mit den Nummern 24-1123, 29-1261 registriert sind.

Das vorgenannte delta-Dinatriumdisilikat entspricht dem in der EP 0 164 514 B1 beschriebenen Na-SKS-6, charakterisiert durch die dort wiedergegebenen Röntgenbeugungsdaten, die dem delta-Na₂Si₂O₅ zugeordnet werden, dessen Röntgenbeugungsdiagramme beim Joint Commitee of Powder Diffraction Standards mit der Nummer 22-1396 registriert sind.

Das feinteilige kristalline schichtförmige Natriumdisilikat gemäß der vorliegenden Erfindung zeichnet sich durch im Vergleich zum Stand der Technik vergrößerten Bindevermögen für Wasserhärte (Calciumbindevermögen) aus, sowie dadurch, daß die Löserückstände in Wasser (nachfolgend durch den Siebrückstandsrest definiert) wesentlich verringert werden.

Bevorzugt weist das feinteilige kristalline schichtförmige Natriumdisilikat einen Gehalt von
0 bis 20 Gew.-% an alpha-Dinatriumdisilikat
0 bis 30 Gew.-% an beta-Dinatriumdisilikat
50 bis 95 Gew.-% an delta-Dinatriumdisilikat
0 bis 20 Gew.-% an amorphen Anteilen
auf.

Besonders bevorzugt weist das feinteilige kristalline schichtförmige Natriumdisilikat einen Gehalt von
0 bis 10 Gew.-% an alpha-Dinatriumdisilikat
0 bis 15 Gew.-% an beta-Dinatriumdisilikat
70 bis 90 Gew.-% an delta-Dinatriumdisilikat
0 bis 10 Gew.-% an amorphen Anteilen
auf

Bevorzugt ist das feinteilige kristalline schichtförmige Natriumdisilikat frei von Natriummetasilikat oder NS-Phasen ist. Es ist auch frei von sogenannten NS-Phasen, wie sie beispielsweise in der PCT/WO 97/19156 und der JP 7/327995 A1 definiert werden und auf die hier ausdrücklich Bezug genommen wird.

Bevorzugt weist das feinteilige kristalline schichtförmige Natriumdisilikat einen d₉₀-Wert von < 100 µm auf.

Bevorzugt weist das feinteilige kristalline schichtförmige Natriumdisilikat einen d₉₀-Wert von < 60 µm auf.

Bevorzugt weist das feinteilige kristalline schichtförmige Natriumdisilikat ein Calciumbindevermögen von mehr als 170 mg CaCO₃/g bei 30 °C und 17° dH auf.

Besonders bevorzugt weist das feinteilige kristalline schichtförmige ein Calciumbindevermögen von mehr als 180 mg CaCO₃/g bei 30 °C und 17° dH auf.

Insbesondere weist das feinteilige kristalline schichtförmige Natriumdisilikat ein Calciumbindevermögen von mehr als 190 mg CaCO₃/g bei 30 °C und 17° dH auf.

Bevorzugt weist das feinteilige kristalline schichtförmige Natriumdisilikat einen Siebrückstandsrest von weniger als 60 % auf.

Bevorzugt weist das feinteilige kristalline schichtförmige Natriumdisilikat einen Siebrückstandsrest von weniger als 40 % auf.

Bevorzugt weist das feinteilige kristalline schichtförmige Natriumdisilikat einen Siebrückstandsrest von weniger als 30 % auf.

Die Erfindung betrifft auch ein Verfahren zur Herstellung von feinteiligen kristallinen schichtförmigen Natriumdisilikaten, dadurch gekennzeichnet, daß man ein Natriumschichtsilikat mit einem Teilchendurchmesser d₅₀ von 80 bis 400 µm auf einen einen d₉₀-Wert von < 100 µm aufmahlt.

Bevorzugt wird bei dem vorgenannten Verfahren das feinteilige kristalline schichtförmige Natriumdisilikat auf einen einen d₉₀-Wert von < 60 µm aufgemahlt.

Bevorzugt wird das Verfahren so ausgeführt, daß man in einer Schwingmühle, Kugelmühle, Walzmühle, Pendelrollmühle oder Luftstrahlmühle aufmahlt.

Die Erfindung betrifft auch die Verwendung der erfindungsgemäßen feinteiligen kristallinen schichtförmigen Natriumdisilikate zur Herstellung von Wasch- und Reinigungsmitteln einschließlich Geschirrspülmitteln.

Die Erfindung betrifft ebenfalls die Verwendung der erfindungsgemäßen feinteiligen kristallinen schichtförmigen Natriumdisilikate als Builder.

Die Erfindung betrifft ebenfalls Wasch- und Reinigungsmittel, die ein erfindungsgemäßes feinteiliges kristallines schichtförmiges Natriumdisilikat, insbesondere neben anderen Inhalts-, Wirk- und Hilfsstoffen, enthalten. Bei den nachfolgenden Mengenangangaben gilt daher, daß diese gegebenenfalls - auch wenn nicht immer ausdrücklich erwähnt - durch die üblichen Inhalts-, Wirk- und Hilfsstoffe für Wasch- und Reinigungsmittel auf die Summe von 100 Gew.-% zu bringen sind.

Bevorzugt enthalten solche Wasch- und Reinigungsmittel 1 bis 80 Gew.-% des erfindungsgemäßen feinteiligen kristallinen schichtförmigen Natriumdisilikates.

Bevorzugt enthalten solche Wasch- und Reinigungsmittel 1 bis 80 Gew.-% Zeolith und 1 bis 80 Gew.-% des erfindungsgemäßen feinteiligen kristallinen schichtförmigen Natriumdisilikates.

Bevorzugt enthalten solche Wasch- und Reinigungsmittel 1 bis 80 Gew.-% Zeolith, 1 bis 80 Gew.-% kristallines Natriumschichtsilikat und 1 bis 80 Gew.-% des erfindungsgemäßen feinteiligen kristallinen schichtförmigen Natriumdisilikates.

Bevorzugt enthalten solche Wasch- und Reinigungsmittel 1 bis 80 Gew.-% des erfindungsgemäßen feinteiligen kristallinen schichtförmigen Natriumdisilikates und 1 bis 10 Gew.-% Citronensäure oder Salze der Citronensäure.

Bevorzugt enthalten solche Wasch- und Reinigungsmittel 1 bis 80 Gew.-% Zeolith, 1 bis 80 Gew.-% des erfindungsgemäßen feinteiligen kristallinen schichtförmigen Natriumdisilikates und 1 bis 10 Gew.-% Citronensäure oder Salze der Citronensäure.

Bevorzugt enthalten solche Wasch- und Reinigungsmittel 1 bis 80 Gew.-% des erfindungsgemäßen feinteiligen kristallinen schichtförmigen Natriumdisilikates und 0,5 bis 5 Gew.-% modifizierte Cellulose.

Bevorzugt enthalten solche Wasch- und Reinigungsmittel 1 bis 80 Gew.-% Zeolith, 1 bis 80 Gew.-% des erfindungsgemäßen feinteiligen kristallinen schichtförmigen Natriumdisilikates und 0,5 bis 5 Gew.-% modifizierte Cellulose.

Bevorzugt enthalten solche Wasch- und Reinigungsmittel 1 bis 80 Gew.-% Zeolith, 1 bis 80 Gew.-% kristallines Natriumschichtsilikat, 1 bis 80 Gew.-% des erfindungsgemäßen feinteiligen kristallinen schichtförmigen Natriumdisilikates und 0,5 bis 5 Gew.-% modifizierte Cellulose.

Die vorgenannte Cellulose kann gegebenefalls chemisch und/oder mechanisch modifiziert werden.

Überraschend wurde gefunden, daß das erfindungsgemäße feinteilige kristalline Natriumdisilikat auch ein gesteigertes Calciumbindevermögen besitzt.

Das erfindungsgemäße kristalline Natriumdisilikat ergibt auch im Vergleich zu kommerziellem kristallinen Natriumdisilikaten wesentlich geringere Rückstände, was mit Hilfe des Siebrückstandstest gezeigt werden kann. Die Maschen des eingesetzten Metallsiebgewebes mit 20µm Maschenweite simulieren dabei die Maschen von Textilgewebe. Statt Metallsiebgewebe kann auch ein Polyestersiebgewebe gleicher Maschenweite eingesetzt werden. Im Siebrückstandstest zeigen die erfindungsgemäßen feinteiligen kristallinen schichtförmigen Natriumdisilikate mit d₉₀-Werten unter 60µm deutlich reduzierte Siebrückstände.

Das erfindungsgemäße feinteilige kristalline Natriumdisilikat kann mit Vorteil als Gerüststoff, auch Builder genannt, eingesetzt werden. Es kann im ganzen Spektrum heute üblicher Waschmittel wie Compact-Vollwaschmittel, Compact-Colorwaschmittel, Vollwaschmittel geringerer Schüttdichte usw. verwendet werden.

Waschmittel, die das erfindungsgemäße feinteilige kristalline Natriumdisilikat enthalten ergeben in Modellwaschtests wesentlich geringere anorganische Inkrustierungen, was man durch Bestimmung der Asche zeigen kann. Letztere bleibt beim Verglühen der Gewebe zurück.

Anorganische Inkrustierungen bestehen zum einen aus in Form von Calciumcarbonat ausgefällter Wasserhärte, als auch aus nicht vollständig aufgelösten oder wieder abgelagerten Resten von Waschmittelbuilder. Sie verringern den Tragekomfort des Wäschestücks indem dieses kratzig wird und verringern die Lebensdauer. Die Verwendung des feinteiligen kristalline Natriumdisilikat in Waschmittel ergibt also einen wesentlichen Vorteil hinsichtlich Langlebigkeit der Gewebe und Tragekomfort.

Die Eigenschaften des erfindungsgemäßen feinteiligen kristallinen schichtförmigen Natriumdisilikats wurde anhand folgender Meßmethoden bestimmt.

### Bestimmung des Calciumbindevermögens

Eine Mischung aus einer Puffer-Stammlösung und deionisiertem Wasser werden in einem ErWeKa Disolutiontester vorgelegt, gerührt und auf 30 °C temperiert. Die Puffer-Stammlösung ist eine wässrige Lösung von Glycin, Natriumchlorid, Calciumchlorid und Natriumhydroxid in geeigneten Konzentrationen. Die Calciumsensitive Elektrode Modell 932001 der Fa. Orion wird in die Lösung eingetaucht und durch Aufstockung der Lösung mit einer Calcium-Stammlösung geeicht. Das geschieht mit der Ausweerteeinheit EA 940 der Fa. Orion. Nach der Aufstockung enthält die Lösung eine Wasserhärte von 17 Grad deutscher Wasserhärte (17° dH). Gleichzeitig mit Zugabe der Untersuchungssubstanz (1 g) wird das Orion EA 940 gestartet. Der pH-Wert der Meßlösung beträgt 10,2. Das Orion EA 940 gibt in bestimmten Zeitabständen die Konzentration an freien Calciumionen aus. Mit Hilfe der bekannten Einwaage an Calcium wird aus der Konzentration der freien, nicht gebundenen Calciumionen nach 10 min auf die Menge gebundenen Calciums, das Calciumbindeverinögen, geschlossen. Dies wird in mg CaCO₃/g angegeben.

### Bestimmung der Kornverteilung mit dem Microtrac Granulometer

Die Teilchengröße in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400 ml Ethanol durch die Lasermeßzelle gepumpt. Automatisch wird die Festkörperprobe (z.B. 70 mg) zudosiert und nach 10 min die Teilchengrößenverteilung bestimmt. Die Auswertungseinheit des Gerätes berechnet den d₅₀- und den d₉₀-Wert.

### Bestimmung der Kornverteilung durch Siebanalyse

In eine Siebmaschine der Fa. Retsch werden die Einsätze mit gewünschten Sieben eingesetzt. Dabei nimmt die Maschenweite der Siebe von oben nach unten ab. 50 g des zu untersuchenden Pulvers werden auf das weiteste Sieb aufgegeben. Durch die Schwingbewegung der Siebmaschine wird das Pulvermaterial durch die verschiedenen Siebe befördert. Die Rückstände auf den Sieben werden ausgewogen und rechnerisch auf die Materialeinwaage bezogen. Aus den Werten können d₅₀- und d₉₀-Werte berechnet werden.

### Siebrückstandstest

Dazu werden 800 ml Leitungswasser [Wasserhärte 14° dH (Grad deutscher Härte)] auf 20 °C temperiert und mit einem Propeller- (Balken-)Rührer gerührt. 2 g der Testsubstanz werden zugegeben und 20 min gerührt. Mit dem leichten Vakuum einer Wasserstrahlpumpe wird die Dispersion durch ein 20µm-Metallsiebgewebe gesaugt. Das Sieb wird bei 80 bis 100 °C eine Stunde im Umlufttrockenschrank getrocknet. Die Gewichtszunahme wird auf die Einwaage bezogen und auf 100% normiert und als Rückstand bezeichnet.

### Herstellung der Testwaschmittel (Tabelle 2)

Die optische Aufheller werden in einem Viertel der Nonionic-Menge angerührt und in einem Haushalts-Multimixer (Fa. Braun) mit der Hälfte der Sodamenge gemischt. Im Pflugscharmischer der Fa. Lödige wird der Rest Soda und die Gesamtmengen Zeolith und Polymer 15 Minuten bei 300 U/Min. gemischt. Dann wird die Hälfte der restlichen Nonionic-Menge in 5 Minuten aufgesprüht. Dann wird das SKS-6 bzw. das Mahlprodukt zugegeben und 10 Minuten gemischt. Danach wird die restliche zweite Hälfte Nonionic in weiteren 5 Minuten aufgesprüht. Schließlich werden Anionic, Seife, Antischaum, Phosphonat und optische Aufheller zugegeben und 10 Minuten bei 300 U/Min. nachgemischt. Im Taumelmischer wird die Mischung aus dem Lödigemischer unter geringer Scherbelastung mit Perborat, TAED und Enzymen versetzt und 15 Minuten vermischt.

Es ist selbstverständlich auch möglich, die Reihenfolge der Zusammengabe der Substanzen zu ändern.

### Waschversuche

In einer haushaltsüblichen Waschmaschine (Typ: Novotronic 927 WPS, Fa. Miele) werden bei 60 °C und einer Wasserhärte von 18° dH spezielle Testgewebe mit dem Testwaschmittel bei einer Dosierung von 65 g Testwaschmittel/Waschgang wiederholt (15 mal) gewaschen. Den Testgeweben, dies sind insbesondere ein Baumwollfrottee- (Fa. Vossen), jeweils ein Baumwolldoppelripp-, Polyester/Baumwolle-Mischgewebe (Typ 20A) und Standardbaumwollgewebe (Typ 10A)der Fa. Wäschereiforschung Krefeld Testgewebe GmbH und ein Standardbaumwollgewebe der Eidgenössischen Materialprüfanstalt St. Gallen, Schweiz, wird weiterer Wäscheballast (3,75 kg) beigefügt. Nach 15 Wäschen wird von jedem der Gewebe eine Probe genommen und diese in einem Muffelofen bei einer Temperatur 1.000 °C und einer Zeitdauer von 24 Stunden verascht.

### Beispiel 1 (Vergleich)

Auf ein elektrisches Schwingsieb (Typ TMA 3070 der Fa. Siemens) mit einem Metallsieb der Maschenweite 1000 µm werden portionsweise 10 kg kommerziell erhältliches SKS-6 (Clariant GmbH, Frankfurt) aufgegeben. Das Ausgangsmaterial hat nach dieser Siebanalyse folgende Kornverteilung:
>1000 µm: 5,5 %
> 500 µm: 19,8 %
> 300 µm: 27,9 %
> 150 µm: 42,2 %
> 75 µm: 63,2 %
d₅₀=122 µm
d₉₀ =843 µm

Als Unterkom wurden ca. 9 kg SKS-6 Pulver mit folgender Kornverteilung (Siebanalyse) erhalten:
>1000 µm: 0,2 %
> 850 µm: 0,4 %
> 710 µm: 2,15%
> 500 µm: 6,9%
> 300 µm: 13,7%
> 150 µm: 26,9 %
d₅₀ = 68µm
d₉₀ = 321 µm

Der Siebrückstandstest ergab 91,3 % Rückstand.

### Beispiel 2 (Vergleich)

SKS-6 Pulver wurde wie in Beispiel 1 gesiebt. Das Ausgangsmaterial hatte folgende Phasenverteilung: alpha-Dinatriumdisilikat 5,6 %, beta-Dinatriumdisilikat 2,3 %, delta-Dinatriumdisilikat 90,4 %, amorpher Anteil 1,4 %.

Es hatte nach Siebanalyse folgende Kornverteilung:
> 1000 µm: 3,4 %
> 500 µm: 17,5 %
> 300 µm: 26,6 %
> 150 µm: 44,6 %
> 75 µm: 65,9 %
d₅₀ =131 µm
d₉₀ =766 µm

Als Unterkorn wurden ca. 8 kg SKS-6 Pulver mit folgender Komverteilung (Siebanalyse) erhalten.
>500 µm: 0,1 %
>300 µm: 9,1 %
>150 µm: 29,8 %
>100 µm: 51,7%
d₅₀ = 81 µm
d₉₀ = 245 µm

Der Siebrückstandstest ergab 86,9 % Rückstand.

### Beispiel 3 (Vergleich)

SKS-6 Pulver wurde wie in Beispiel 1 gesiebt. Das Ausgangsmaterial hatte folgende Phasenverteilung: alpha-Dinatriumdisilikat 10,8 %, beta-Dinatriumdisilikat 4,4 %, delta-Dinatriumdisilikat 79,4 %, amorpher Anteil 5,4 %.

Es hatte nach Siebanalyse folgende Kornverteilung:
>1000 µm: 4,4 %
> 500 µm: 18,3 %
> 300 µm: 26,9 %
> 150 µm: 43,6 %
> 75 µm: 64,4 %
d₅₀ =127 µm
d₉₀ =799 µm

Das Überkorn wurde in einer Kugelmühle 3 h mit einer Kugelmühle U 280A0 der Fa. Welte gemahlen, die innen metallausgekleidet ist und deren Trommel sich mit ca. 50 U/min dreht. Als Mahlkörper werden 44 kg Porzellankugeln mit Durchmessern von 1,8, 2,9, 3,5 und 5cm eingesetzt. Dann wurde noch einmal gesiebt. Die Unterkornfraktionen, insgesamt 9 kg, wurden vereinigt und hatten folgende Kornverteilung (Siebanalyse):
>150 µm: 13,8 %
> 75 µm: 44,3 %
> 63 µm: 54,3 %
> 53 µm: 67,1 %
d₅₀ = 72 µm
d₉₀ = 157 µm

Der Siebrückstandstest ergab 73,5 % Rückstand.

### Beispiel 4 (Erfindung)

10 kg SKS-6 Pulver wurden analog Beispiel 3 gemahlen. Es hatte nach Siebanalyse folgende Kornverteilung:
>1000 µm: 3,9 %
> 500 µm: 19,5 %
> 300 µm: 28,8 %
> 150 µm: 47,1 %
> 75 µm: 68,6 %
d₅₀ =140 µm
d₉₀ =805 µm

Das erhaltene Mahlprodukt (ca. 10 kg) besitzt folgende Kornverteilung (Microtrac):
>53 µm: 0,5 µm
>33 µm: 10 µm
>20 µm: 30,6 µm
d₅₀ = 11,9 µm
d₉₀ = 33,9 µm

Das Mahlprodukt hatte folgende Phasenverteilung: alpha-Dinatriumdisilikat 22,0 %, beta-Dinatriumdisilikat 12,1 %, delta-Dinatrium-disilikat 65,3 %, amorpher Anteil 0,6 %.

Der Siebrückstandstest ergab 20,3 % Rückstand.

### Beispiel 5 (Erfindung)

In einer Aeroplex-Fließbett-Gegenstrahlmühle der Fa. Hosokawa-Alpine AG (Typ AFG-200) wurde bei einem Materialeintrag von 6-10 kg/h und einer Sichterscheibendrehzahl von 6000 U/min SKS-6 gemahlen. Es hatte nach Siebanalyse folgende Kornverteilung:
>1000 µm: 5,8 %
> 500 µm: 20,0 %
> 300 µm: 28,3 %
> 150 µm: 45,5 %
> 75 µm: 68,6%
dso =135 µm
d₉₀ =852 µm

Das erhaltene Mahlprodukt (ca. 600 kg) ergab folgende Kornverteilung (Microtrac):
d₅₀ = 5,5 µm
d₉₀ = 12 µm

Das Mahlprodukt hatte folgende Phasenverteilung: alpha-Dinatriumdisilikat 10,6 %, beta-Dinatriumdisilikat 6,9 %, delta-Dinatrium-disilikat 80,3 %, amorpher Anteil 2,3 %.Der Siebrückstandstest ergab 21,1 % Rückstand.

### Beispiel 6 (Erfindung)

In einer Pendelrollenmühle (Typ PM00) der Fa. Neuman&Esser mit rotierendem Sichter, Ventilator, Staubabscheider und Filteranlage wurden 1000 kg SKS-6 mit der Komverteilung nach des Ausgangsproduktes von Beispiel 1 gemahlen. Die Durchsatzleistung war 83,5 kg/h (Material zum Filter: 5,5kg/h, Luftdruck im Windsichter: 290 mmWS).
a) Bei einer Sichterdrehzahl von 250 U/min wurde ein Mahlprodukt mit folgender Kornverteilung (Microtrac) erhalten: <1µm: 0,6%, <1,5µm: 1,2%, <2µm: 3,3%, <3µm:6,2%, <4µm: 8,7%, <6µm: 12,6%, <8µm: 16,9%, <12µm: 24,8%, <16µm: 33,1%, <24µm: 49,8%, <32µm: 67,2%, <48µm: 89,8%, <64µm: 96,2%, <96µm: 100%, d₅₀= 24,1µm, d₉₀= 48,5µm
Mit höherer Drehzahl wird auch feineres Material im Sichter abgeschieden (b und c):
b) Bei einer Sichterdrehzahl von 340 U/min wurde ein Mahlprodukt mit folgender Kornverteilung (Microtrac) erhalten: <1µm: 0,5%, <1,5µm: 1,1%, <2µm: 3,5%, <3µm:6,3%, <4µm: 8,5%, <6µm: 13,3%, <8µm: 18,2%, <12µm: 27,8%, <16µm: 36,3%, <24µm: 56,8%, <32µm: 74,9%, <48µm: 93,6%, <64µm: 98,8%, <96µm: 100%, d₅₀= 21,4µm, d₉₀= 44,9µm
c) Bei einer Sichterdrehzahl von 450 U/min wurde ein Mahlprodukt mit folgender Kornverteilung (Microtrac) erhalten: <1µm: 0,6%, <1,5µm: 1,5%, <2µm: 4,8%, <3µm:8,8%, <4µm: 12,8%, <6µm: 18,5%, <8µm: 24,6%, <12µm: 37,8%, <16µm: 53,8%, <24µm: 81,2%, <32µm: 93,7%, <48µm: 100,0, d₅₀= 15,1µm, d₉₀=29,6um
Die Mahlprodukte hatten folgende Phasenverteilungen: alpha-Dinatriumdisilikat 8,3 %, beta-Dinatriumdisilikat 7,5 %, delta-Dinatrium-disilikat 82,8 %, amorpher Anteil 1,4 %.

**Tabelle 1**

| Siebrückstandsrest und Calciumbindevermögen | | |
|---|---|---|
| . | Rückstand im Siebrück-standstest | Calcium-Bindevermögen |
| | [%] | [mg CaCO₃/g] |
| Bsp. 1 | 91,3 | 180 |
| Bsp. 2 | 86,9 | 182 |
| Bsp.3 | 73,5 | 180 |
| Bsp. 4 | 20,3 | 191 |
| Bsp. 5 | 21,1 | 196 |
| Bsp. 6c | 25,2 | 191 |

### Beispiel 7 (Erfindung)

Entsprechend der allgemeinen Vorschrift "Herstellung der Testwaschmittel" wurde ein Test-Compact-Vollwaschmittel mit 31 Gew.-% feinteiligem kristallinem Natriumdisilikat aus Beispiel 4 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,50 %.

### Beispiel 8 (Erfindung)

Entsprechend der allgemeinen Vorschrift "Herstellung der Testwaschmittel" wurde ein Test-Compact-Colorwaschmittel mit 35 Gew.-% feinteiligem kristallinem Natriumdisilikat aus Beispiel 4 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,53 %.

### Beispiel 9 (Erfindung)

Entsprechend der allgemeinen Vorschrift "Herstellung der Testwaschmittel" wurde ein Test-Compact-Vollwaschmittel mit 12 Gew.-% feinteiligem kristallinem Natriumdisilikat aus Beispiel 5 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,71 %.

### Beispiel 10 (Erfindung)

Entsprechend der allgemeinen Vorschrift "Herstellung der Testwaschmittel" wurde ein Test-Vollwaschmittel mit 4 Gew.-% feinteiligem kristallinem Natriumdisilikat aus Beispiel 6c hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,86 %.

### Beispiel 11 (Vergleich)

Entsprechend der allgemeinen Vorschrift "Herstellung der Testwaschmittel" wurde ein Testwaschmittel mit 12 Gew.-% SKS-6 aus Beispiel 1 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 2,54 %.

**Tabelle 2**

| Zusammensetzung der Testwaschmittel | | | | | |
|---|---|---|---|---|---|
| | Bsp.7 [%] | Bsp.8 [%] | Bsp.9 [%] | Bsp.10 [%] | Bsp.11 [%] |
| Zeolith A | 0 | 0 | 19 | 17 | 19 |
| SKS-6 | 31 | 35 | 12 | 4 | 12 |
| Polymer | 5 | 5 | 5 | 5 | 5 |
| Soda | 16 | 0 | 16 | 15 | 16 |
| Bicarbonat | 0 | 15 | 0 | 0 | 0 |
| Percarbonat | 18 | 0 | 0 | 0 | 0 |
| Perboratmonohydrat | 0 | 0 | 18 | 0 | 18 |
| Perborattetrahydrat | 0 | 0 | 0 | 20 | 0 |
| TAED | 5 | 0 | 5 | 2,5 | 5 |
| LAS | 10 | 7 | 10 | 10 | 10 |
| Nonionics | 8 | 10 | 8 | 5 | 8 |
| Seife | 2 | 1,5 | 2 | 2 | 2 |
| Entschäumer | 1 | 0,5 | 1 | 1 | 1 |
| Enzym I | 1,5 | 1 | 1,5 | 0,7 | 1,5 |
| Enzym II | 1,5 | 1 | 1,5 | 0,7 | 1,5 |
| Opt. Aufheller I | 0,25 | 0 | 0,25 | 0,15 | 0,25 |
| Opt. Aufheller II | 0,25 | 0 | 0,25 | 0,15 | 0,25 |
| Phosphonat | 0,5 | 0 | 0,5 | 0,3 | 0,5 |
| Natriumcitrat | 0 | 2 | 0 | 0 | 0 |
| Polyvinylpyrrolidon | 0 | 1 | 0 | 0 | 0 |
| Soil release Polymer | 0 | 1 | 0 | 0 | 0 |
| CMC | 0 | 1 | 0 | 0 | 0 |
| Sulfat | Rest | Rest | Rest | Rest | Rest |
| Dosierung [g/Wäsche] | 65 | 65 | 65 | 130 | 65 |
| Asche [%] | 1,50 | 1,53 | 1,71 | 1,86 | 2,54 |

### Eingesetzte Substanzen:

- Zeolith A:: Wessalith P, Fa. Degussa
- SKS-6:: Schichtsilikat SKS-6 Pulver, Fa. Clariant
- Polymer:: Sokalan CP5, Fa. BASF
- Soda:: Schwersoda, Fa. Matthes&Weber
- Bicarbonat:: Fa. Solvay
- Percarbonat:: Oxyper C, Fa. Solvay Interox
- Perboratmonohydrat:: Fa. Degussa
- Perborat tetrahydrat:: Fa. Degussa
- TAED:: TAED 4049, Fa. Clariant
- Anionic:: ARL, Fa. Hüls
- Nonionics:: Genapol OAA 080, Fa. Clariant
- Seife:: Liga Grundseife HM11E
- Entschäumer:: 11.Plv.ASP3, Fa. Wacker
- Enzym I:: Termamyl 60T, Fa. Solvay Enzymes
- Enzym II:: Savinase 6.0 TW, Fa. Solvay Enzymes
- Optischer Aufheller I:: Tinopal CBS-X, Fa. Ciba
- Optischer Aufheller II:: Tinopal DMS-X, Fa. Ciba
- Phosphonat:: Dequest 2041, Fa. Monsanto
- Natriumcitrat:: von Fa. Fluka
- Polyvinylpyrrolidon:: Sokalan HP50, Fa. BASF
- Soil release Polymer:: SRC 1, Fa. Clariant
- CMC:: Tylose 2000, Fa. Clariant
- Sulfat:: Leichtsulfat, Fa. Solvay

## Patentansprüche

1. Feinteiliges kristallines schichtförmiges Natriumdisilikat der Formel NaMSiₓO₂ₓ₊₁⁻-y₂O, wobei M Natrium oder Wasserstoff bedeutet, x eine Zahl von 1,9 bis 4 und y eine Zahl von 0 bis 20 ist, bestehend aus
0 bis 40 Gew.-% an alpha-Dinatriumdisilikat
0 bis 40 Gew.-% an beta-Dinatriumdisüikat
40 bis 100 Gew.-% an delta-Dinatriumdisilikat
0 bis 40 Gew.-% an amorphen Anteilen,
**dadurch gekennzeichnet, dass** es einen d₉₀-Wert von 29,6 bis 100 µm, ein **Calciumbindevermögen von mehr als 170 mg CaCO**_{**3**}**/g bei 30 °C und 17° dH sowie einen Siebrückstandsrest von weniger als 60 %** aufweist.

2. Feinteiliges kristallines schichtförmiges Natriumdisilikat nach Anspruch 1, **dadurch gekennzeichnet, dass** es einen d₉₀-Wert von 29,6 bis 60 µm aufweist.

3. Feinteiliges kristallines schichtförmiges Natriumdisilikat nach Anspruch 1 und/oder 2, **dadurch gekennzeichnet, dass** es einen Gehalt von
0 bis 20 Gew.-% an alpha-Dinatriumdisilikat
0 bis 30 Gew.-% an beta-Dinatriumdisilikat
50 bis 95 Gew.-% an delta-Dinatriumdisilikat
0 bis 20 Gew.-% an amorphen Anteilen,
aufweist.

4. Feinteiliges kristallines schichtförmiges Natriumdisilikat nach mindestens einem der Ansprüche 1 bis 3, **dadurch gekennzeichnet, dass** es einen Gehalt von
0 bis 10 Gew.-% an alpha-Dinatriumdisilikat
0 bis 15 Gew.-% an beta-Dinatriumdisilikat
70 bis 90 Gew.-% an delta-Dinatriumdisilikat
0 bis 10 Gew.-% an amorphen Anteilen,
aufweist.

5. Verwendung von feinteiligen kristallinen schichtförmigen Natriumdisilikaten nach einem oder mehreren der Ansprüche 1 bis 4 zur Herstellung von Wasch- und Reinigungsmitteln einschließlich Geschirrspülmitteln. Natriumdisilikaten

6. Verwendung von feinteiligen kristallinen schichtförmigen Natriumdisilikaten nach einem oder mehreren der Ansprüche 1 bis 4 als Builder.

7. Wasch- und Reinigungsmittel, **dadurch gekennzeichnet, dass** es 1 bis 80 Gew.-% des feinteiligen kristallinen schichtförmigen Natriumdisilikates nach einem oder mehreren der Ansprüche 1 bis 4 enthält.

8. Wasch- und Reinigungsmittel, **dadurch gekennzeichnet, dass** es 1 bis 80 Gew.-% Zeolith und 1 bis 80 Gew.-% des feinteiligen kristallinen schichtförmigen Natriumdisilikates nach einem oder mehreren der Ansprüche 1 bis 4 enthält.

9. Wasch- und Reinigungsmittel, **dadurch gekennzeichnet, dass** es 1 bis 80 Gew.-% Zeolith, 1 bis 80 Gew.-% kristallines Natriumdisilikat und 1 bis 80 Gew.-% des feinteiligen kristallinen schichtförmigen Natriumdisilikates nach einem oder mehreren der Ansprüche 1 bis 4 enthält.

10. Wasch- und Reinigungsmittel, **dadurch gekennzeichnet, dass** es 1 bis 80 Gew.-% des feinteiligen kristallinen schichtförmigen Natriumdisilikates nach einem oder mehreren der Ansprüche 1 bis 4 und 1 bis 10 Gew.-% Citronensäure oder Salze der Citronensäure enthält.

11. Wasch- und Reinigungsmittel, **dadurch gekennzeichnet, dass** es 1 bis 80 Gew.-% Zeolith, 1 bis 80 Gew.-% des feinteiligen kristallinen schichtförmigen Natriumdisilikates nach einem oder mehreren der Ansprüche 1 bis 4 und 1 bis 10 Gew.-% Citronensäure oder Salze der Citronensäure enthält.

12. Wasch- und Reinigungsmittel, **dadurch gekennzeichnet, dass** es 1 bis 80 Gew.-% des feinteiligen kristallinen schichtförmigen Natriumdisilikates nach einem oder mehreren der Ansprüche 1 bis 4 und 0,5 bis 5 Gew.-% modifizierte Cellulose enthält.

13. Wasch- und Reinigungsmittel, **dadurch gekennzeichnet, dass** es 1 bis 80 Gew.-% Zeolith, 1 bis 80 Gew.-% des feinteiligen kristallinen schichtförmigen Natriumdisilikates nach einem oder mehreren der Ansprüche 1 bis 4 und 0,5 bis 5 Gew.-% modifizierte Cellulose enthält.

14. Wasch- und Reinigungsmittel, **dadurch gekennzeichnet, dass** es 1 bis 80 Gew.-% Zeolith, 1 bis 80 Gew.-% kristallines Natriumschichtsilikat, 1 bis 80 Gew.-% des feinteiligen kristallinen schichtförmigen Natriumdisilikates nach einem oder mehreren der Ansprüche 1 bis 4 und 0,5 bis 5 Gew.-% modifizierte Cellulose enthält.

15. Wasch- und Reinigungsmittel nach einem oder mehreren der Ansprüche 12 bis 14, **dadurch gekennzeichnet, dass** die Cellulose chemisch und/oder mechanisch modifiziert werden kann.

16. Verfahren zur Verringerung des Siebrückstandes eines kristallinen schichtförmigen Natriumdisilikats der Formel NaMSiₓO₂ₓ₊₁⁻yH₂O, wobei M Natrium oder Wasserstoff bedeutet, x eine Zahl von 1,9 bis 4 und y eine Zahl von 0 bis 20 ist, bestehend aus
0 bis 40 Gew.-% an alpha-Dinatriumdisilikat
0 bis 40 Gew.-% an beta-Dinatriumdisilikat
40 bis 100 Gew.-% an delta-Dinatriumdisilikat
0 bis 40 Gew.-% an amorphen Anteilen,
**dadurch gekennzeichnet, dass** man das Natriumdisilikat auf einen d₉₀-Wert 29,6 bis 100 µm aufmahlt.

## Claims

1. A finely divided crystalline layered sodium disilicate of the formula NaMsiₓO₂ₓ₊₁·yH₂O, where M is sodium or hydrogen, x is a number from 1.9 to 4, and y is a number from 0 to 20, which comprises from 0 to 40% by weight of alpha-disodium disilicate
from 0 to 40% by weight of beta-disodium disilicate
from 40 to 100% by weight of delta-disodium disilicate
from 0 to 40% by weight of amorphous components, which has a d₉₀ value of from 29.6 to 100 µm, a calcium-binding capacity of more than 170 mg of CaCO₃/g at 30°C and 17° German hardness, and a sieve residue of less than 60%.

2. The finely divided crystalline layered sodium disilicate as claimed in claim 1, which has a d₉₀ value of from 29.6 to 60 µm.

3. The finely divided crystalline layered sodium disilicate as claimed in claim 1 and/or 2, which comprises
from 0 to 20% by weight of alpha-disodium disilicate
from 0 to 30% by weight of beta-disodium disilicate
from 50 to 95% by weight of delta-disodium disilicate
from 0 to 20% by weight of amorphous components.

4. The finely divided crystalline layered sodium disilicate as claimed in at least one of claims 1 to 3, which comprises
from 0 to 10% by weight of alpha-disodium disilicate
from 0 to 15% by weight of beta-disodium disilicate
from 70 to 90% by weight of delta-disodium disilicate
from 0 to 10% by weight of amorphous components.

5. The use of finely divided crystalline layered sodium disilicates as claimed in one or more of claims 1 to 4 for the preparation of detergents and cleaners including dishwashing detergents.

6. The use of finely divided crystalline layered sodium disilicates as claimed in one or more of claims 1 to 4 as builders.

7. A detergent or cleaner which comprises from 1 to 80% by weight of the finely divided crystalline layered sodium disilicate as claimed in one or more of claims 1 to 4.

8. A detergent or cleaner which comprises from 1 to 80% by weight of zeolite and from 1 to 80% by weight of the finely divided crystalline layered sodium disilicate as claimed in one or more of claims 1 to 4.

9. A detergent or cleaner which comprises from 1 to 80% by weight of zeolite, from 1 to 80% by weight of crystalline sodium phyllosilicate and from 1 to 80% by weight of the finely divided crystalline layered sodium disilicate as claimed in one or more of claims 1 to 4.

10. A detergent or cleaner, which comprises from 1 to 80% by weight of the finely divided crystalline layered sodium disilicate as claimed in one or more of claims 1 to 4 and from 1 to 10% by weight of citric acid or salts of citric acid.

11. A detergent or cleaner, which comprises from 1 to 80% by weight of zeolite, from 1 to 80% by weight of the finely divided crystalline layered sodium disilicate as claimed in one or more of claims 1 to 4 and from 1 to 10% by weight of citric acid or salts of citric acid.

12. A detergent or cleaner, which comprises from 1 to 80% by weight of the finely divided crystalline layered sodium disilicate as claimed in one or more of claims 1 to 4 and from 0.5 to 5% by weight of modified cellulose.

13. A detergent or cleaner, which comprises from 1 to 80% by weight of zeolite, from 1 to 80% by weight of the finely divided crystalline layered sodium disilicate as claimed in one or more of claims 1 to 4 and from 0.5 to 5% by weight of modified cellulose.

14. A detergent or cleaner, which comprises from 1 to 80% by weight of zeolite, from 1 to 80% by weight of crystalline sodium phyllosilicate, from 1 to 80% by weight of the finely divided crystalline layered sodium disilicate as claimed in one or more of claims 1 to 4 and from 0.5 to 5% by weight of modified cellulose.

15. The detergent or cleaner as claimed in one or more of claims 12 to 14, wherein the cellulose can be chemically and/or mechanically modified.

16. A process for reducing the sieve residue of a crystalline layered sodium disilicate of the formula NaMSiₓO₂ₓ₊₁ · yH₂O, where M is sodium or hydrogen, x is a number from 1.9 to 4, and y is a number from 0 to 20, which comprises
from 0 to 40% by weight of alpha-disodium disilicate
from 0 to 40% by weight of beta-disodium disilicate
from 40 to 100% by weight of delta-disodium disilicate
from 0 to 40% by weight of amorphous components, wherein the sodium disilicate is ground to a d₉₀ value of from 29.6 to 100 µm.

## Revendications

1. Silicate de sodium cristallin lamellaire finement divisé de formule NaMSiₓO₂ₓ₊₁·yH₂O, dans laquelle M représente le sodium ou l'hydrogène, x est un nombre de 1,9 à 4 et y est un nombre de 0 à 20, constitué de
0 à 40 % en poids d'alpha-disilicate de disodium
0 à 40 % en poids de bêta-disilicate de disodium
40 à 100 % en poids de delta-disilicate de disodium
0 à 40 % en poids de parties amorphes,
**caractérisé en ce qu'**il présente une valeur d₉₀ de 29,6 à 100 µm, un pouvoir de liaison du calcium de plus de 170 mg CaCO₃/g à 30°C et 17° dH ainsi qu'un résidu de tamisage de moins de 60 %.

2. Silicate de sodium cristallin lamellaire finement divisé selon la revendication 1, **caractérisé en ce qu'**il présente une valeur d₉₀ de 29,6 à 60 µm.

3. Silicate de sodium cristallin lamellaire finement divisé selon la revendication 1 et/ou 2, **caractérisé en ce qu'**il présente une concentration de
0 à 20 % en poids d'alpha-disilicate de disodium
0 à 30 % en poids de bêta-disilicate de disodium
50 à 95 % en poids de delta-disilicate de disodium
0 à 20 % en poids de parties amorphes.

4. Silicate de sodium cristallin lamellaire finement divisé selon au moins une des revendications 1 à 3, **caractérisé en ce qu'**il présente une concentration de
0 à 10 % en poids d'alpha-disilicate de disodium
0 à 15 % en poids de bêta-disilicate de disodium
70 à 90 % en poids de delta-disilicate de disodium
0 à 10 % en poids de parties amorphes.

5. Utilisation de disilicates de sodium cristallins lamellaires finement divisés selon une ou plusieurs des revendications 1 à 4 pour la préparation de lessives et de détergents y compris d'agents de rinçage de la vaisselle.

6. Utilisation de disilicates de sodium cristallins lamellaires finement divisés selon une ou plusieurs des revendications 1 à 4 comme adjuvant de lavage (builder).

7. Lessive et détergent, **caractérisés en ce qu'**ils contiennent de 1 à 80 % en poids du disilicate de sodium cristallin lamellaire finement divisé selon une ou plusieurs des revendications 1 à 4.

8. Lessive et détergent, **caractérisés en ce qu'**ils contiennent de 1 à 80 % en poids de zéolithe et de 1 à 80 % en poids du disilicate de sodium cristallin lamellaire finement divisé selon une ou plusieurs des revendications 1 à 4.

9. Lessive et détergent, **caractérisés en ce qu'**ils contiennent de 1 à 80 % en poids de zéolithe, de 1 à 80 % en poids de disilicate de sodium cristallin et de 1 à 80 % en poids du silicate de sodium cristallin lamellaire finement divisé selon une ou plusieurs des revendications 1 à 4.

10. Lessive et détergent, **caractérisés en ce qu'**ils contiennent de 1 à 80 % en poids du disilicate de sodium cristallin lamellaire finement divisé selon une ou plusieurs des revendications 1 à 4 et de 1 à. 10 % en poids d'acide citrique ou de sels de l'acide citrique.

11. Lessive et détergent, **caractérisés en ce qu'**ils contiennent de 1 à 80 % en poids de zéolithe, de 1 à 80 % en poids du disilicate de sodium cristallin lamellaire finement divisé selon une ou plusieurs des revendications 1 à 4 et de 1 à 10 % en poids d'acide citrique ou de sels de l'acide citrique.

12. Lessive et détergent, **caractérisés en ce qu'**ils contiennent de 1 à 80 % en poids du disilicate de sodium cristallin lamellaire finement divisé selon une ou plusieurs des revendications 1 à 4 et de 0,5 à 5 % en poids de cellulose modifiée.

13. Lessive et détergent, **caractérisés en ce qu'**ils contiennent de 1 à 80 % en poids de zéolithe, de 1 à 80 % en poids du disilicate de sodium cristallin lamellaire finement divisé selon une ou plusieurs des revendications 1 à 4 et de 0,5 à 5 % en poids de cellulose modifiée.

14. Lessive et détergent, **caractérisés en ce qu'**ils contiennent de 1 à 80 % en poids de zéolithe, de 1 à 80 % en poids de silicate de sodium cristallin lamellaire, de 1 à 80 % en poids du disilicate de sodium cristallin lamellaire finement divisé selon une ou plusieurs des revendications 1 à 4 et de 0,5 à 5 % en poids de cellulose modifiée.

15. Lessive et détergent selon une ou plusieurs des revendications 12 à 14, **caractérisés en ce que** la cellulose peut être modifiée chimiquement et/ou mécaniquement.

16. Procédé de diminution du résidu de tamisage d'un disilicate de sodium cristallin lamellaire de formule NaMSiₓO₂ₓ₊₁·yH₂O, dans laquelle M représente le sodium ou l'hydrogène, x est un nombre de 1,9 à 4 et y est un nombre de 0 à 20 constitué de
0 à 40 % en poids d'alpha-disilicate de disodium
0 à 40 % en poids de bêta-disilicate de disodium
40 à 100 % en poids de delta-disilicate de disodium
0 à 40 % en poids de parties amorphes,
**caractérisé en ce qu'**on broie le disilicate de sodium à une valeur d₉₀ de 29, 6 à 100 µm.
